Europäisches Patentamt

European Patent Office

Office européen des brevets

(19)

(11) Numéro de publication : **0 005 410**
**B1**

(12) **FASCICULE DE BREVET EUROPÉEN**

(45) Date de publication du fascicule du brevet :
16.02.83

(21) Numéro de dépôt : **79420019.6**

(22) Date de dépôt : **18.04.79**

(51) Int. Cl.³ : **C 04 B 35/52**, C 25 C   3/08,
F 27 D   1/10, C 21 B   7/14

(54) **Pâte carbonée pour mise en·forme à froid; application et procédé pour la réalisation de garnissages au moyen de ladite pâte.**

(30) Priorité : 20.04.78 FR 7812447
19.02.79 FR 7904769

(43) Date de publication de la demande :
14.11.79 Bulletin 79/23

(45) Mention de la délivrance du brevet :
16.02.83 Bulletin 83/07

(84) Etats contractants désignés :
DE GB NL

(56) Documents cités :
FR A 1 552 933
US A 3 303 031

(73) Titulaire : **SOCIETE DES ELECTRODES ET REFRAC-
TAIRES SAVOIE (SERS)**
**12, rue du Général Foy**
**F-75008 Paris (FR)**

(72) Inventeur : **Dumas, Daniel**
**6, Route d'Heyrieux**
**F-69800 Saint-Priest (FR)**
Inventeur : **Lacroix, Serge**
**18, rue du Professeur Nicolas**
**F-69008 Lyon (FR)**
Inventeur : **Vallon, Jean**
**18, Sente des Gaudines**
**F-78570 Andresy (FR)**

(74) Mandataire : **Givord, Jean-Pierre et al**
**PECHINEY UGINE KUHLMANN 28, rue de Bonnel**
**F-69433 Lyon Cedex 3 (FR)**

Jouve, 18, rue St-Denis, 75001 Paris, France

**Pâte carbonée pour mise en forme à froid ; application et procédé pour la réalisation de garnissages au moyen de ladite pâte**

Le produit et le procédé qui font l'objet de l'invention concernent un nouveau type de pâte carbonée apte à la mise en forme à froid et son mode de mise en œuvre.

De façon générale, il est connu d'utiliser des pâtes carbonées pour effectuer le garnissage en matériaux carbonés d'enceintes dans lesquelles on se propose de contenir toutes sortes de matières solides, liquides ou gazeuses, souvent portées à des températures élevées ou très élevées, telles que des métaux ou des alliages solides, liquides ou gazeux, des laitiers fondus, des électrolytes fondus, etc... Les pâtes carbonées peuvent aussi être utilisées pour la réalisation d'enceintes en matériaux carbonés destinés à contenir à température ambiante, ou voisine de l'ambiante, ou encore à température relativement peu élevée, des matières corrosives telles que des acides, des bases ou des sels et toutes sortes de composés agressifs, à l'état solide ou liquide, fondus ou en solution.

Les garnissages d'enceintes en matières carbonées peuvent être réalisés entièrement par application d'une couche de pâte carbonée suivant l'invention, d'épaisseur convenable, ou bien par mise en place de blocs carbonés dont le jointoiement est assuré au moyen de la pâte carbonée suivant l'invention.

Ce procédé de jointoiement est souvent appelé brasquage, en particulier dans le cas de la confection des revêtements carbonés qui garnissent le fond et les parois des cellules d'électrolyse de l'aluminium. Le terme de brasque est alors employé pour désigner la pâte carbonée utilisée. Cette brasque doit pouvoir pénétrer jusqu'au fond des espaces existant entre les blocs de carbone ; elle doit aussi mouiller la surface de ces blocs en pénétrant dans tous leurs interstices ; elle doit, enfin, se transformer progressivement, au cours de la cuisson, en un résidu carboné qui assure, à la façon d'un ciment, une liaison solide entre les blocs carbonés contigus. Une telle pâte doit pouvoir aussi être appliquée sur toutes sortes de substrats, tels que, par exemple, des réfractaires non carbonés ou des parois métalliques et, dans ce cas également, pouvoir, après cuisson, se transformer en une couche carbonée stable adhérant au substrat sur lequel elle repose.

Il est connu d'utiliser, pour la réalisation de tels garnissages, des pâtes carbonées constituées par le mélange de grains de coke, de graphite et/ou d'anthracite calciné et/ou encore d'autres formes de charbon calciné, avec un liant carboné contenant un brai de pétrole et/ou de houille ainsi qu'éventuellement un goudron, d'un point de ramollissement supérieur à la température ambiante. En général, ces pâtes doivent, pour que leur compactage soit possible, être préchauffées au-dessus de 100 °C.

L'obtention d'une bonne densification de la pâte, indispensable pour atteindre un niveau optimal de propriétés après cuisson, nécessite l'utilisation d'outils appropriés, tels que ceux à marteaux ou à semelles vibrantes, et un travail soigné. Il faut, en particulier, maintenir la pâte à une température suffisante pour qu'elle reste plastique pendant toute la période de mise en place.

L'expérience montre que cette exigence de maintien de la pâte carbonée à température supérieure à l'ambiante présente de graves inconvénients. Tout d'abord, la pâte chaude dégage des vapeurs provenant des liants hydrocarbonés qu'elle contient. Les vapeurs émises par les goudrons et les brais sont généralement considérées comme toxiques et les règlements d'hygiène et de sécurité en vigueur dans les différents pays deviennent de plus en plus rigoureux en ce qui concerne leurs niveaux de concentration admissibles dans l'atmosphère des ateliers, et les durées d'exposition acceptables. Ceci conduit à rechercher des moyens de protection des opérateurs chargés de la mise en place de ces pâtes chaudes qui gênent souvent l'exécution soignée de ces garnissages. Il faut, par ailleurs, disposer, au moment voulu, de la quantité de pâte nécessaire, à la température désirée, ce qui nécessite un préchauffage et un malaxage soignés pour que le niveau de température convenable soit atteint dans toute la masse de la pâte. Au cours de sa mise en place, cette pâte se refroidit rapidement au contact de l'air ambiant et des matériaux avec lesquels elle doit assurer une liaison : blocs carbonés, parois métalliques ou autres. Bien souvent, ce refroidissement localisé empêche la pénétration de la pâte dans les interstices des parois avec lesquelles elle est en contact, et limite sa densification. Ceci entraîne une liaison défectueuse qui sera, par la suite, une cause de fissuration et peut-être même de rupture du garnissage. De tels phénomènes peuvent être particulièrement graves, par exemple dans le cas du jointoiement de blocs carbonés qui garnissent le fond d'une cellule d'électrolyse de l'aluminium. En effet, au cours de la vie de la cellule, ce garnissage est en contact avec de l'aluminium liquide surchauffé à environ 300 °C au-dessus de son point de fusion, et qui ne demande donc qu'à s'infiltrer à travers la moindre fissure. Pour remédier à ces difficultés, il est souvent nécessaire de préchauffer non seulement la pâte, mais toute la masse de l'enceinte cathodique et des blocs de carbone qui la garnissent. Il s'agit là d'une opération longue et coûteuse.

Enfin, une partie au moins de la pâte qui a été préchauffée en vue, par exemple, de la réalisation d'un ensemble de joints entre blocs carbonés ne sera pas mise en œuvre en temps voulu, et, par suite de son refroidissement, ne pourra pas être utilisée.

Pour remédier à certaines de ces difficultés, il a été proposé de mélanger au brai contenu dans la pâte carbonée, un solvant permettant de rendre ce brai plastique à température ambiante. C'est ainsi que le brevet US 4.032.653 propose d'utiliser pour le brasquage de cellules d'électrolyse de l'aluminium, une pâte carbonée dont le liant à base de brai est rendu plastique à température voisine de l'ambiante, par addition d'un solvant. On utilise pour cela des hydrocarbures aromatiques à point d'ébullition compris entre 150 et 350 °C tels que les méthylnaphtalènes.

Les exemples donnés montrent qu'une telle pâte carbonée peut effectivement être utilisée pour le brasquage de blocs carbonés à des températures de l'ordre de 25 °C environ. Malheureusement, même à ces températures relativement basses, les méthylnaphtalènes ont des tensions de vapeur relativement importantes, et la mise en œuvre d'une pâte carbonée en contenant se heurte aux contraintes sévères des règlements d'hygiène et de sécurité. De plus, lorsque la température ambiante s'abaisse sensiblement au-dessous de 25 °C, la plasticité de la pâte diminue assez rapidement.

Par la suite, au moment de la mise en chauffage des garnissages ainsi réalisés, tout le solvant aromatique se dégage dans l'atmosphère et le problème de sa captation se pose à nouveau.

Le brevet français n° 2.255.395 propose une pâte carbonée pouvant se mettre en forme à température ambiante, qui contient un dérivé du furane et un brai pulvérulent à haut point de ramollissement. La dissolution partielle du brai dans le furane confère à cette pâte une plasticité suffisante pour sa mise en œuvre à température ambiante ; au bout d'un certain temps, cette pâte durcit sous l'action d'un catalyseur contenu dans les matières sèches.

De même que dans le cas de l'utilisation d'un méthylnaphtalène comme plastifiant, l'utilisation de dérivés du furane se heurte, elle aussi, aux contraintes qu'imposent les considérations d'hygiène et de sécurité. En effet, les vapeurs émises par les furanes sont dangereuses à respirer même à température ambiante.

De plus, la présence d'un catalyseur dans la pâte carbonée, qui provoque le durcissement du dérivé du furane par polymérisation, fait que la pâte doit être mise en forme dans un délai très court après mélange. Tout ceci explique que la seule application d'une telle pâte carbonée décrite dans le FR 2.255.395 est la confection de blocs carbonés par moulage sous pression d'un mélange comportant des grains de carbone partiellement imprégnés de matières alcalines qui agissent comme catalyseur de polymérisation du dérivé du furane. On sait que, pratiquement, les contraintes de temps ne permettraient pas d'utiliser un tel type de pâte pour le garnissage d'une enceinte ou le jointoiement de blocs carbonés.

Le brevet US 3.303.031 décrit une pâte carbonée de brasquage pour mise en forme à froid qui, en plus des matières carbonées calcinées habituelles et du liant à haute température, comporte 12 à 40 % en poids d'argile associé à une quantité déterminée d'eau et un lignosulfonate de calcium.

Cette pâte, qui convient pour le garnissage de certains types de fours, tels que des cubilots, ne peut convenir dans les cas où on recherche une bonne conductivité électrique ainsi qu'une grande inertie chimique vis-à-vis de réducteurs métalliques liquides tels que l'aluminium.

Le brevet FR 1.552.933 décrit un procédé de régénération de matières carbonées, essentiellement des cokes de pétrole, contenant 5 à 20 % de matières volatiles, qui ont été dégradées par oxydation ou exposition aux agents atmosphériques, et n'ont plus la capacité d'agglomération voulue pour utilisation directe dans une pâte carbonée. Dans ce procédé, après avoir mélangé ces matières broyées finement avec un liant temporaire constitué par une solution diluée dans l'eau d'un produit tel qu'un amidon ou une mélasse ainsi qu'avec un liant permanent, on fait passer ce mélange dans un granulateur travaillant à température ambiante, puis on sèche et on cuit les granules obtenues.

Il ressort de la description de ce brevet, que les mélanges carbonés qui sont décrits ne sont nullement des pâtes de brasquage aptes à la mise en forme à froid, et ont seulement la capacité d'agglomération voulue pour permettre la fabrication de grains synthétiques dont les dimensions ne dépassent pas environ 25 mm à partir de poudres dans un granulateur travaillant à froid.

Ces grains synthétiques sont ensuite utilisés pour la fabrication de pâtes carbonées classiques.

La nouvelle pâte carbonée qui fait l'objet de l'invention, permet de résoudre les différents problèmes qui étaient restés non résolus jusqu'à présent.

Il s'agit d'une pâte carbonée qui, grâce à sa plasticité à température ambiante, est utilisable sans aucun préchauffage pour toutes les applications des pâtes carbonées habituelles, et, en particulier, pour le jointoiement de blocs carbonés. Cette pâte est constituée essentiellement d'au moins 70 % en masse de matières carbonées calcinées, un plastifiant à haute température, constitué d'un ou plusieurs composés carbonés organiques insolubles dans l'eau et un plastifiant à température ambiante constitué d'un ou plusieurs composés en solution aqueuse, la teneur en eau de la pâte carbonée ne dépassant pas 5 % en masse.

Cette pâte est rendue plastique à l'ambiante au moyen de composés qui ne sont pas des dérivés du pétrole ou des goudrons de houille, et qui ne sont pratiquement pas volatils aux alentours de la température ambiante, et, par conséquent, ne présentent aucun danger respiratoire. Pour ces raisons, la mise en œuvre de cette pâte ne présente aucune contre-indication du point de vue des règlements d'hygiène et de sécurité.

Par ailleurs, cette pâte, comme on va le voir, a une très longue durée de conservation, à condition d'être stockée dans des emballages étanches à l'eau, tels que des sacs en matière plastique. En effet, on fait appel, comme plastifiant à froid, à des composés en solution aqueuse. Grâce aux caractéristiques de ces composés, et à l'utilisation de sachets étanches, cette pâte carbonée, une fois préparée, devient disponible à tout moment, même après un stockage prolongé et sa mise en œuvre est immédiate sans nouveau malaxage ni réchauffage.

L'un des avantages essentiels de l'utilisation d'un composé en solution dans l'eau, comme plastifiant à température ambiante, est de permettre l'utilisation, de façon classique, comme plastifiant à haute température, des brais secs ou d'autres composés organiques insolubles dans l'eau. On évite ainsi toute interaction entre les deux plastifiants, ce qui empêche l'évolution des propriétés de la pâte carbonée en fonction du temps.

La pâte carbonée suivant l'invention comporte donc un plastifiant à température ambiante qui est constitué par une solution aqueuse de certains composés minéraux ou organiques. On préfère les composés qui présentent, après cuisson, un résidu de carbone fixe tels que ceux extraits de certains végétaux ou résultant du traitement de ceux-ci. Ces composés sont principalement des alginates, des lignosulfonates et les mélasses. Ils peuvent être utilisés séparément ou en association.

C'est ainsi que de bons résultats sont obtenus en utilisant des solutions aqueuses contenant à la fois un ou plusieurs lignosulfonates alcalins et une certaine proportion de mélasse. La quantité de solution aqueuse contenue dans la pâte est d'environ 8 à 15 % en masse, les meilleurs résultats étant obtenus avec 11 à 13 % environ. Cette pâte carbonée contient comme plastifiant à haute température un brai sec en poudre, à point de ramollissement supérieur à 100 °C. Ce brai peut être remplacé en tout ou en partie, par certaines résines telles que les résines formophénoliques utilisées également en poudre, pour permettre une bonne répartition au moment du malaxage. On peut utiliser aussi d'autres résines thermoplastiques insolubles dans l'eau.

La teneur en plastifiant à haute température de la pâte carbonée, est, en général, de 6 à 15 % et, en masse, de préférence 7 à 13 %. Les teneurs en plastifiants à basse et haute température doivent être ajustés, comme cela est bien connu de l'homme de l'art, en fonction de la nature, de la granulométrie et de la porosité des matières carbonées calcinées contenues dans la pâte. Ces matières carbonées sont des graphites, des cokes, des anthracites calcinés, des charbons calcinés, des déchets de blocs de graphite ou de blocs carbonés précuits, ou encore des déchets d'électrodes de graphite ou de carbone, utilisés séparément ou en mélange suivant les caractéristiques que l'on désire conférer à la pâte carbonée. Leur teneur totale dans la pâte, est, en général, au moins égale à 70 % en masse.

En dehors de ces trois constituants, la pâte carbonée peut éventuellement contenir de très petites quantités d'additions diverses dont la concentration ne dépasse pas, en général, quelques pour cent. C'est ainsi que l'on peut, éventuellement, ajouter à la pâte des agents conservateurs anti-moisissures, dans le cas où la solution aqueuse plastifiante contient des sucres.

Comme cela a été expliqué plus haut, la pâte carbonée suivant l'invention permet de réaliser un nouveau procédé d'exécution de revêtements carbonés de tous types. Comme on le verra, les pâtes carbonées suivant l'invention présentent, après cuisson, des caractéristiques mécaniques et autres propriétés au moins égales à celles des pâtes classiques à mise en forme à chaud.

Les exemples non limitatifs ci-après, décrivent des modes de réalisation du procédé suivant l'invention.

Exemple 1

On applique le procédé suivant l'invention au brasquage d'une cellule industrielle d'électrolyse de l'aluminium.

La quantité totale de pâte carbonée nécessaire pour le brasquage de cette cellule était d'environ 3 t.

Cette pâte carbonée a été préparée de la façon suivante : on a malaxé à froid, pendant 5 minutes, un mélange composé de :
— 780 kg de grains d'anthracite calciné de dimensions maximales inférieures à 15 mm,
— 100 kg de brai en poudre (grains inférieurs à 0,5 mm) ayant un point de ramollissement mesuré par la méthode de Kraemer et Sarnow de 120 °C.

On a ensuite ajouté 120 kg d'une mélasse ayant une viscosité dynamique de 5 Pa/sec. à 20 °C, puis on a repris le malaxage pendant 20 mn. La pâte a ensuite été conditionnée en sacs plastiques de 30 kg.

On a préparé ainsi, en plusieurs fois, la quantité de 3 t de pâte nécessaire pour le brasquage de la cellule.

Plusieurs semaines après la préparation de cette pâte, celle-ci a été utilisée de la façon suivante : les sacs amenés au bord de la cellule ont simplement été ouverts puis vidés dans les joints ménagés entre les blocs carbonés mis en place au préalable.

Au moment du remplissage des joints par la pâte carbonée, la température ambiante était d'environ 10 °C.

Grâce à la nature granuleuse du produit, celui-ci s'introduit facilement jusque dans les interstices les plus étroits. La pâte a été alors compactée in situ par couches successives au moyen de marteaux pneumatiques équipés des outils habituellement utilisés.

Les caractéristiques particulières de la pâte carbonée suivant l'invention ont permis d'effectuer l'opération sans contrainte de temps, sans odeur, le travail de compaction pouvant être interrompu à tout moment pour être repris ultérieurement sans préjudice pour la qualité définitive des joints.

Le démarrage de la cellule ainsi brasquée a ensuite été effectué de la façon habituelle. Après seize mois de fonctionnement sans aucun incident, on a vérifié l'absence de toute infiltration d'aluminium dans le fond de la cellule.

Des essais séparés effectués sur la même pâte carbonée ont montré, après cuisson, une résistance à l'écrasement supérieure à 250 kg/cm², et une déformation au test de Rapoport de 1,2 %.

Des essais approfondis ont montré que si la pâte carbonée de brasquage décrite dans l'exemple 1 donne d'excellents résultats dans le cas du remplissage de joints relativement étroits entre des blocs carbonés, les résultats sont moins favorables quand on réalise des joints de grande largeur. C'est ainsi que, dans le cas du brasquage de la cathode d'une cellule industrielle d'électrolyse de l'aluminium de forte puissance, la réalisation du joint de grande largeur qui raccorde sur les quatre côtés de la cellule, le fond et les parois latérales, est particulièrement délicate. Ce joint, dont la largeur atteint souvent 20 à 30 cm, présente souvent une pente transversale de l'ordre de 45° ou davantage par rapport à l'horizontale. L'expérience montre que, au cours du fonctionnement de la cellule, ce joint est en contact tantôt avec l'aluminium liquide souvent animé de mouvements de translation plus ou moins rapides, tantôt avec l'électrolyte qui peut être lui-même alternativement liquide ou solide. Dans de telles conditions, les caractéristiques de tenue à l'abrasion et à la compression ne sont pas toujours suffisamment élevées après cuisson de la pâte carbonée.

On a constaté qu'il était possible d'améliorer encore de façon spécifique ces deux caractéristiques en évitant en particulier un gonflement excessif de la pâte lorsque la cuisson est effectuée à très grande vitesse.

Pour cela, on a d'abord constaté que l'on pouvait éviter le gonflement de la pâte au cours de la cuisson en limitant la teneur en eau au-dessous de 5 %. En même temps, il est nécessaire, si on veut que la pâte puisse se mettre en forme de façon suffisamment solide, de disposer d'une quantité suffisante d'un plastifiant en solution aqueuse présentant un excellent pouvoir agglomérant. Il est connu, par ailleurs, que toute addition d'élément plastifiant non carboné comme l'argile, réduit, après cuisson, de façon inacceptable, la résistance à l'attaque chimique par l'aluminium liquide et réduit aussi, de façon très notable, la conductivité électrique et les caractéristiques mécaniques. On s'est aperçu que l'on pouvait associer une excellente formabilité et un gonflement faible en utilisant comme plastifiant à température ambiante, uniquement une mélasse ou un sucre tel que le glucose ou encore un mélange de mélasse et de sucre, en solution dans une quantité d'eau aussi limitée que possible. Dans de telles conditions, on a constaté que la teneur de la pâte carbonée en solution aqueuse de mélasse et/ou de sucre, pouvait être limitée à une valeur maximale de 13 % en masse. De plus, la teneur en eau de la pâte carbonée doit elle-même être limitée à la quantité nécessaire à l'obtention d'une viscosité adéquate de la solution de mélasse et/ou du sucre et, de toute façon inférieure à 5 %.

On s'arrange, dans la pratique, pour utiliser une quantité d'eau aussi faible que possible, compatible avec une viscosité acceptable. De préférence, cette teneur en eau de la pâte carbonée obtenue ne dépasse pas 3 % en masse. Cette pâte carbonée comporte, comme cela a été dit précédemment, au moins 70 % de matières carbonées calcinées et 6 à 15 % d'un plastifiant à haute température constitué par du brai et/ou une résine thermoplastique. D'autres essais ont montré que l'on pouvait réaliser une pâte carbonée de brasquage suivant l'invention ayant des caractéristiques de résistance à l'écrasement après cuisson encore supérieures en utilisant dans sa composition comme matière carbonée en totalité, ou au moins en majeure partie, des déchets broyés de blocs de graphite ou de carbone précuits, tels que ceux qui sont utilisés pour la construction des cathodes des cellules d'électrolyse de l'aluminium, ou pour le revêtement intérieur de fours tels que des hauts fourneaux ou des fours d'électrothermie, ou encore des déchets d'électrodes de graphite ou de carbone. Ces déchets broyés ont l'avantage d'être constitués par une matière de base, anthracite et/ou coke qui a déjà été agglomérée avec du brai puis pressée et ensuite calcinée, ce qui a diminué de façon importante sa porosité et accru sa tenue mécanique. Ces déchets peuvent être constitués par des rebuts de fabrication, ou être récupérés au cours de la démolition de revêtements carbonés de fours hors d'usage. Dans le cas des blocs de cathodes des cellules d'électrolyse de l'aluminium, il convient cependant d'éviter de mettre en œuvre des déchets de blocs contenant des quantités trop importantes de composés fluorés. Ceux-ci peuvent éventuellement être extraits pour un traitement préalable. On peut aussi utiliser à la place de déchets, une matière carbonée à base d'anthracite et/ou de coke liée avec du brai qui aura été spécialement élaborée puis calcinée et enfin broyée pour aboutir à des caractéristiques comparables.

Enfin, pour accroître les caractéristiques mécaniques obtenues après cuisson, il est souhaitable d'accroître la proportion de fines inférieures à 0,25 mm dans les matières carbonées incorporées à la pâte de brasquage. Cette proportion est, de préférence, supérieure à 50 % et peut aller jusqu'à 80 % en masse, le reste étant des grains compris entre 0,25 et 5 ou 10 mm environ. Un mode de réalisation d'une telle pâte est décrit ci-dessous.

Exemple 2

On a préparé une pâte carbonée suivant l'invention contenant en % en masse : 80 % de déchets broyés de blocs carbonés précuits provenant de rebuts de fabrication de blocs pour cathodes de cellules d'électrolyse de l'aluminium, 1/3 des déchets ainsi broyés avaient une grosseur de grains comprise entre 10 et 0,25 mm et les 2/3 étaient des fines inférieures à 0,25 mm, 12 % d'une solution aqueuse de glucose à 20 % d'eau, 8 % de brai sec.

Ce mélange a été convenablement malaxé. On a ensuite prélevé des échantillons qui, après avoir été mis en place dans un moule à température ambiante à l'aide de marteaux pneumatiques identiques à ceux habituellement employés lors des brasquages de cathodes de cellules d'électrolyse d'aluminium, ont été cuits jusqu'à une température de 950 °C. Des essais d'écrasement ont ensuite été faits sur ces échantillons. On a constaté qu'ils présentaient des résistances à l'écrasement atteignant 300 bars.

De plus, le taux de déformation au test de Rapoport était inférieur à 1 %. Ces résultats montrent les performances tout à fait exceptionnelles d'une pâte de brasquage suivant l'invention. Une telle pâte, comme il a été dit plus haut, peut être utilisée pour de très nombreuses applications. Elle convient en particulier pour la réalisation de joints de forte largeur. Elle peut convenir aussi dans tous les cas où l'on recherche une très bonne tenue à l'écrasement et à l'érosion et un très faible taux de gonflement au moment de la cuisson. Une telle pâte convient aussi pour revêtir les goulottes ou chenaux de coulée de métaux ou alliages liquides et aussi pour réaliser en tout ou partie des garnissages de fours.

Un des avantages essentiels de la pâte carbonée décrite dans l'exemple 2, est que les caractéristiques mécaniques exceptionnellement élevées obtenues sont réalisées en évitant l'introduction de tout composé ou mélange de composés non carbonés, dont une partie au moins demeurerait intégrée dans la matière carbonée après cuisson. En effet, l'addition, par exemple d'argile, à des pâtes carbonées, à titre de plastifiant, permet d'obtenir des caractéristiques mécaniques relativement élevées. Mais, après cuisson, l'inertie chimique du produit obtenu est beaucoup moins grande et, en particulier, il ne résiste plus de façon suffisante à l'attaque par des métaux ou alliages liquides fortement réducteurs tels que l'aluminium. De plus, sa résistivité électrique est considérablement accrue.

La pâte carbonée suivant l'invention présente par ailleurs l'avantage de permettre d'éviter les pertes en ne mettant en œuvre que juste les quantités nécessaires. Du fait du conditionnement en sacs étanches, les sacs non utilisés peuvent être conservés pendant de très longues périodes en vue d'une utilisation ultérieure. Pour éviter la formation de moisissures, on peut ajouter à la pâte carbonée, un agent conservateur. La quantité introduite doit être aussi faible que possible.

De très nombreuses autres applications de la pâte carbonée suivant l'invention peuvent être effectuées. Elle peut, en particulier, être utilisée pour le revêtement partiel ou total de toutes sortes d'enceintes destinées à contenir des produits à température élevée à l'état solide, liquide ou gazeux. Ces revêtements peuvent comporter des blocs de carbone dont le jointoiement est assuré par la pâte carbonée suivant l'invention ; ils peuvent aussi être réalisés au moyen d'une couche continue de cette pâte carbonée déposée sur un substrat convenable. Cette pâte carbonée peut aussi servir à revêtir toute sorte de dispositifs de coulée de métaux liquides tels que goulottes, canaux, poches de coulée etc...

Elle peut, enfin, être utilisée pour le garnissage partiel ou total d'enceintes destinées à contenir des matières corrosives de toutes natures, solides, liquides ou gazeuses à toutes températures.

## Revendications

1. Pâte carbonée de brasquage apte à la mise en forme à froid, caractérisée en ce qu'elle est constituée essentiellement d'au moins 70 % en masse de matières carbonées calcinées, un plastifiant à haute température, constitué d'un ou plusieurs composés carbonés organiques insolubles dans l'eau et un plastifiant à température ambiante constitué d'un ou plusieurs composés en solution aqueuse, la teneur en eau de la pâte carbonée ne dépassant pas 5 % en masse.

2. Pâte carbonée suivant la revendication 1, caractérisée en ce que le plastifiant à température ambiante est une solution aqueuse de mélasse/s et/ou d'autres sucres, et/ou d'alginate/s, et/ou de lignosulfonate/s.

3. Pâte carbonée suivant les revendications 1 ou 2, caractérisée en ce que le plastifiant à haute température est un brai et/ou une résine thermoplastique.

4. Pâte carbonée suivant l'une des revendications 1 à 3, caractérisée en ce qu'elle contient 8 à 15 % en masse de plastifiant à température ambiante et 6 à 15 % en masse de plastifiant à haute température.

5. Pâte carbonée suivant l'une des revendications 1 à 4, caractérisée en ce que le plastifiant à température ambiante est une solution aqueuse de mélasse et/ou de sucre.

6. Pâte carbonée suivant la revendication 5, caractérisée en ce que sa teneur en eau est, de préférence, limitée à 3 % en masse, sa teneur en solution aqueuse de plastifiant à température ambiante ne dépassant pas 13 % en masse.

7. Pâte carbonée suivant l'une des revendications 1 à 6, caractérisée en ce que les matières carbonées qu'elle contient sont constituées en totalité ou au moins en majeure partie par des déchets de blocs de graphite ou de blocs de carbone précuits.

8. Pâte carbonée suivant l'une des revendications 1 à 7, caractérisée en ce que les matières carbonées calcinées qu'elle contient comportent 50 à 80 % de fines d'une grosseur inférieure à 0,25 mm.

9. Pâte carbonée suivant l'une des revendications 1 à 8, caractérisée en ce qu'elle contient un agent conservateur anti-moisissures.

10. Procédé de réalisation de garnissages carbonés destinés à être cuits, caractérisé en ce que ces garnissages sont réalisés en tout ou partie au moyen d'une pâte carbonée suivant l'une des revendications 1 à 9, appliquée à température ambiante, sans réchauffage préalable des substrats et/ou des matériaux avec lesquels elle est mise en contact.

11. Procédé suivant la revendication 10, caractérisé en ce que le garnissage carboné que l'on réalise comporte des blocs de carbone précuits disposés côte à côte, dont on effectue le jointoiement en remplissant les intervalles, à température ambiante, au moyen de la pâte carbonée dont la composition est définie par l'une des revendications 1 à 9.

12. Application du procédé suivant l'une des revendications 10 ou 11, au brasquage de cellules d'électrolyse de l'aluminium.

13. Application du procédé suivant l'une des revendications 10 ou 11, à la réalisation de garnissages de goulottes ou chenaux de coulée de métaux ou alliages liquides.

14. Application du procédé suivant l'une des revendications 10 ou 11, à la réalisation de garnissages de fours.

## Claims

1. A carbonaceous brasquing paste suitable for cold shaping, characterised in that it essentially comprises at least 70 % by weight of calcined carbonaceous materials, a high-temperature plasticising agent comprising one or more water-insoluble organic carbonaceous compounds and an ambient-temperature plasticising agent comprising one or more compounds in aqueous solution, the proportion of water in the carbonaceous paste not exceeding 5 % by weight.

2. A carbonaceous paste according to claim 1, characterised in that the ambient-temperature plasticising agent is an aqueous solution of one or more molasses and/or other sugars and/or one or more alginates and/or one or more lignosulphonates.

3. A carbonaceous paste according to claim 1 or claim 2, characterised in that the high-temperature plasticising agent is a pitch and/or a thermoplastic resin.

4. A carbonaceous paste according to one of claims 1 to 3, characterised in that it contains from 8 to 15 % by weight of ambient-temperature plasticising agent and from 6 to 15 % by weight of high-temperature plasticising agent.

5. A carbonaceous paste according to one of claims 1 to 4, characterised in that the ambient-temperature plasticising agent is an aqueous solution of molasses and/or sugar.

6. A carbonaceous paste according to claim 5, characterised in that the water content thereof is preferably limited to 3 % by weight, the amount of aqueous solution of ambient-temperature plasticising agent not exceeding 13 % by weight.

7. A carbonaceous paste according to one of claims 1 to 6, characterised in that the carbonaceous materials contained therein are formed totally or at least for the major part thereof by prebaked carbon block or graphite block waste.

8. A carbonaceous paste according to one of claims 1 to 7, characterised in that the calcined carbonaceous materials contained therein comprise from 50 to 80 % of fines which are less than 0.25 mm in size.

9. A carbonaceous paste according to one of claims 1 to 8, characterised in that it contains an anti-mould preserving agent.

10. A process for producing carbonaceous linings intended to be baked, characterised in that said linings are made entirely or in part by means of a carbonaceous paste according to one of claims 1 to 9, applied at ambient emperature, without preliminary heating of the substrates and/or the materials with which it is brought into contact.

11. A process according to claim 10, characterised in that the carbonaceous lining produced comprises prebaked carbon blocks which are disposed side-by-side and which are jointed by filling the spaces therebetween at ambient temperature by means of the carbonaceous paste, the composition of which is defined in one of claims 1 to 9.

12. Use of the process according to claim 10 or claim 11, for brasquing aluminium electrolysis cells.

13. Use of the process according to claim 10 or claim 11, for producing linings for channels or gates for casting liquid metals or alloys.

14. Use of the process according to claim 10 or claim 11, for producing furnace linings.

## Ansprüche

1. Kaltformbare Kohlepaste zum feuerfesten Auskleiden, dadurch gekennzeichnet, daß sie im wesentlichen besteht aus wenigstens 70 Gew.% an calcinierten kohlenstoffhaltigen Massen, aus einem Plastifizierungsmittel für Hochtemperatur, das aus einer oder mehreren wasserunlöslichen kohlenstoffhaltigen Verbindungen besteht, und aus einem Plastifizierungsmittel für Umgebungstemperatur, das aus einer oder mehreren Verbindungen in wäßriger Lösung besteht, wobei der Wassergehalt der Kohlepaste 5 Gew.% nicht übersteigt.

2. Kohlepaste nach Anspruch 1, dadurch gekennzeichnet, daß das Plastifizierungsmittel für Umgebungstemperatur eine wäßrige Lösung ist aus Melasse(-n) und/oder anderen Stärkearten und/oder Alginat(-en) und/oder Lignosulfat(-en).

3. Kohlepaste nach Anspruch 1 oder 2, dadurch gekennzeichnet, daß das Plastifizierungsmittel für Hochtemperatur ein Pech und/oder ein thermoplastisches Harz ist.

4. Kohlepaste nach einem der Ansprüche 1 bis 3, dadurch gekennzeichnet, daß sie 8 bis 15 Gew.% an Plastifizierungsmittel für Umgebungstemperatur und 6 bis 15 Gew.% an Plastifizierungsmittel für Hochtemperatur enthält.

5. Kohlepaste nach einem der Ansprüche 1 bis 4, dadurch gekennzeichnet, daß das Plastifizierungsmittel für Umgebungstemperatur eine wäßrige Lösung aus Melasse und/oder Zucker ist.

6. Kohlepaste nach Anspruch 5, dadurch gekennzeichnet, daß ihr Wassergehalt vorzugsweise auf 3 Gew.% beschränkt ist, wobei ihr Gehalt an wäßriger Lösung von Plastifizierungsmittel für Umgebungstemperatur 13 Gew.% nicht übersteigt.

7. Kohlepaste nach einem der Ansprüche 1 bis 6, dadurch gekennzeichnet, daß die von ihr enthaltenen Kohlenstoffmassen ganz oder wenigstens zum größten Teil aus vorgebrannten Abfällen von Graphitblöcken oder Kohlenstoffblöcken bestehen.

8. Kohlepaste nach einem der Ansprüche 1 bis 7, dadurch gekennzeichnet, daß die von ihr enthaltenen calcinierten kohlenstoffhaltigen Massen 50 bis 80 % Feinkohle mit einer Korngröße von weniger als 0,25 mm enthalten.

9. Kohlepaste nach einem der Ansprüche 1 bis 8, dadurch gekennzeichnet, daß sie ein gegen Schimmelpilz wirkendes Konservierungsmittel enthält.

10. Verfahren zur Herstellung von einbrennbaren kohlenstoffhaltigen Auskleidungen, dadurch gekennzeichnet, daß diese Auskleidungen ganz oder zum größten Teil aus einer Kohlepaste nach einem der Ansprüche 1 bis 9 hergestellt werden, die bei Umgebungstemperatur aufgebracht wird, und zwar ohne vorhergehende Erhitzung von Substraten und/oder von Materialien, mit denen sie in Berührung gebracht wird.

11. Verfahren nach Anspruch 10, dadurch gekennzeichnet, daß die hergestellte kohlenstoffhaltige Auskleidung nebeneinander liegende vorgebrannte Kohlenstoffblöcke aufweist, deren Ausfugung dadurch erfolgt, daß bei Umgebungstemperatur die Zwischenräume mittels der Kohlepaste gefüllt werden, deren Zusammensetzung durch einen der Ansprüche 1 bis 9 gegeben ist.

12. Anwendung des Verfahrens nach einem der Ansprüche 10 oder 11 beim feuerfesten Auskleiden von Aluminiumelektrolyseuren.

13. Anwendung des Verfahrens nach einem der Ansprüche 10 oder 11 bei der Herstellung von Auskleidungen von Ausläufen oder Ausgußrinnen für flüssige Metalle oder Legierungen.

14. Anwendung des Verfahrens nach einem der Ansprüche 10 oder 11 bei der Herstellung von Ofenauskleidungen.